# EUROPEAN PATENT APPLICATION

(11) **EP 1 885 139 A1**
(43) Date of publication of application: **06.02.2008**
(21) Application number: 06016136.1
(22) Date of filing: 02.08.2006
(51) Int. Cl.: H04Q 3/60

(54) **Aggregation switch, method of operating an aggregation switch and corresponding computer program product**

(71) Applicant: Nokia Siemens Networks GmbH & Co. KG, 81541 München (DE)
(72) Inventor: Attar, Guy, 60920 Zoran (IL); Berechya, David, 40600 Tel-Mond (IL); Hazay, Alon, 62917 Tel Aviv (IL); Nachman, Yaron, 49722 Petah-Tikva (IL)

(57) **Abstract**

The invention relates to an aggregation switch for coupling a digital subscriber line access multiplexer (102, 104, 106,...) to an aggregation network (100), the aggregation switch having a set of physical ports (A, B, C, D), each physical port of the set of physical ports being adapted to provide a set of virtual ports, wherein each of the virtual ports is defined by one of the physical ports in combination with a subscriber identifier.

## Description

### Field of the invention

The present invention relates to an aggregation switch for coupling a digital subscriber line access multiplexer (DSLAM) to an aggregation network. The invention also relates to respective methods and computer program products.

### Background and related art

A DSLAM is a network device for receiving signals from multiple customer digital subscriber line (DSL) connections and for aggregation of these signals on a high-speed backbone line using multiplexing techniques. A DSLAM may connect DSL lines with some combination of asynchronous transfer mode (ATM), frame relay and/or internet protocol (IP) network. A DSLAM may offer the ability to tag virtual local area network (VLAN) traffic as it passes from the subscribers to upstream routers.

Some prior art DSLAMs provide additional advanced functionalities such as support for multicast and traffic-management functionalities. However such 'intelligent' DSLAMs are quite expensive both in terms of capital expenditure and operational expenses in comparison to 'dumb' DSLAMs that only provide basic network connectivity functionalities.

The present invention aims to provide an improved aggregation switch for coupling a DSLAM to an aggregation network as well as respective methods and computer program products.

### Summary of the invention

The present invention provides an aggregation switch for coupling a digital subscriber line access multiplexer to an aggregation network, the aggregation switch having a set of physical ports, each physical port of the set of physical ports being adapted to provide a set of virtual ports, wherein each of the virtual ports is defined by one of the physical ports in combination with a subscriber identifier.

Embodiments of the present invention are particularly advantageous as usage of 'dumb' DSLAMs is facilitated. In particular, the invention enables to implement advanced functionalities in the aggregation switch rather than in the DSLAMs. This has a substantial cost advantage as deployment of a large number of 'intelligent' DSLAMs can be avoided by moving the advanced functionalities into the first level aggregation switch.

This is particularly advantageous if very high speed digital subscriber lines to (VDSL2) is used as an access technology in accordance with ITU-T recommendation G.993.2. VDSL2 is an advanced standard of DSL broadband wire line communications. It is designed to support the wide deployment of services such as voice, video, data, high definition television (HDTV) and interactive gaming. VDSL2 is an enhancement to G.993.1 VDSL that permits the transmission of asymmetric and symmetric full-duplex aggregate data rates up to 200 megabits per second on twisted pairs using a bandwidth up to 30 megahertz. However, VDSL2 deteriorates quickly from a theoretical maximum of 250 megabits per second at 'source' to 100 megabits per second at 0.5 km. Since VDSL2 can support relatively short distances only, a corresponding large number of DSLMs is thus required. As the present invention facilitates usage of 'dumb' and relatively inexpensive DSLAMs the cost saving effect for VDSL2 applications is thus dramatic in view of the large number of DSLAMs that are required.

In accordance with an embodiment of the invention the aggregation switch is adapted to replicate an incoming data stream for transmission of the replicated data streams via the same physical port. Replication of a data stream, such as a digital television program, is thus performed on the level of the aggregation switch rather than by the DSLAMs.

In accordance with an embodiment of the invention a port identifier of the DSLAM to which an end user device of a given subscriber is connected is used as the subscriber identifier for defining a virtual port. Such a port identifier can thus be used as an exterior VLAN tag.

In accordance with an embodiment of the invention the aggregation switch comprises a forwarding database for the virtual ports. In particular, the forwarding database may include mapping information that is generated by a learning component. The forwarding database may also include a component for ageing-out the mapping information and/or the information that is mapped to the virtual ports.

In accordance with an embodiment of the invention the tuples consisting of service identifiers and source media access control (MAC) address are mapped to the virtual ports. The service identifier (such as the Interior VLAN Tag) may specify a particular service that has been requested by a subscriber, such as service request for receiving a data stream, in particular a digital television program.

This mapping information is particularly useful for unicast MAC learning and ageing. The unicast MAC information is dynamically learnt in the forwarding database and the respective mapping information is stored.

In accordance with a further embodiment of the invention tuples consisting of the service identifier and a destination MAC address are mapped to the virtual port. This is particularly useful for providing unicast MAC forwarding. When a frame is to be sent the aggregation switch can search the forwarding database in order to resolve the mapping from the service identifier, destination MAC address tuple to the virtual port. The aggregation switch then tags the frame with the service identifier and the customer identifier, and sends it out.

In accordance with a further embodiment of the invention tuples consisting of the service identifier and a destination multicast MAC address are mapped to the virtual addresses. This is useful for providing a multicast MAC forwarding function. When a multicast frame is to be sent, the aggregation switch searches the forwarding database to resolve the mapping from the service identifier/destination multicast MAC address tuples to the virtual ports. The frame is then replicated and each replication is tagged according to the respective virtual port information. The replications are sent out with the same service identifiers and different customer identifiers.

In another aspect the present invention relates to a method of operating an aggregation switch for coupling a digital subscriber line access multiplexer to an aggregation network, the aggregation switch having a set of physical ports, the method comprising providing a set of virtual ports for each of the physical ports of the set of physical ports, wherein a virtual port is defined by one of the physical ports in combination with a subscriber identifier.

In still another aspect the present invention relates to a computer program product comprising executable instructions for operating an aggregation switch using virtual port definitions.

### Brief description of the drawings

In the following embodiments of the invention are described by way of example only making reference to the drawings in which:
- Figure 1: is a schematic diagram illustrating the overall architecture of a network comprising a first level aggregation switch in accordance with an embodiment of the invention,
- Figure 2: is a block diagram of a more detailed embodiment of an aggregation switch of the invention,
- Figure 3: is a block diagram of a further embodiment of an aggregation switch of the invention.

### Detailed description

Throughout the following detailed description like elements of different embodiments are referenced by the same reference numerals.

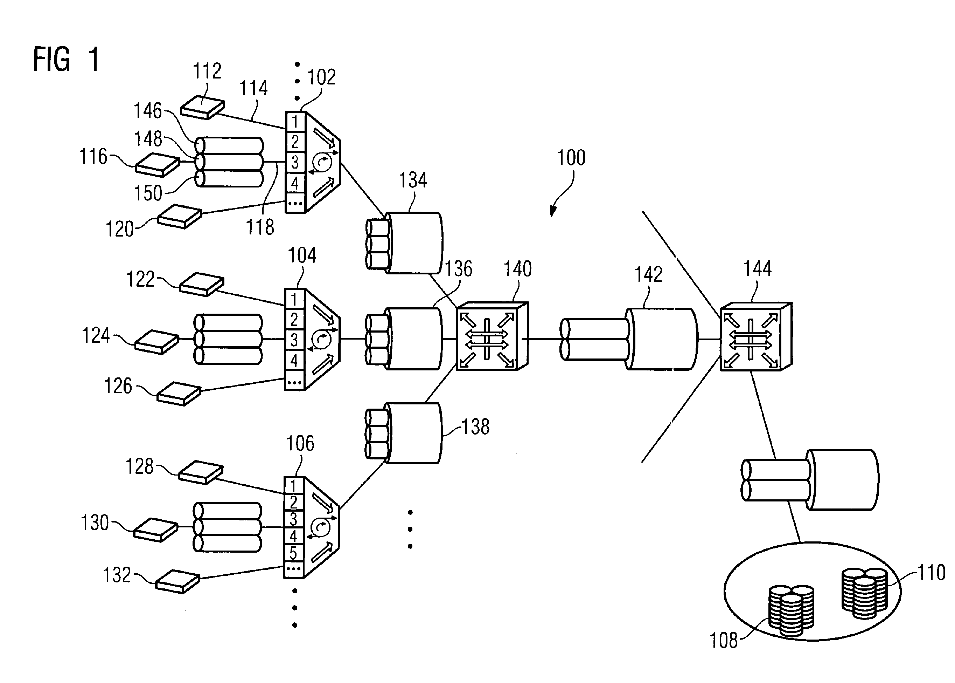

Fig. 1 shows a so called aggregation switch network 100 that couples a number of DSLAMs 102, 104, 106,... to broadband remote access servers (BRAS) 108, 110,...

Each of the DSLAMs has a number of ports for connecting end user devices.

For example, the DSLAM 102 has ports 1 to K, DSLAM 104 has ports 1 to L and DSLAM 106 has ports 1 to M,... where K, L and M are integer numbers. For example, an end user device 112, such as a personal computer, is connected to port 1 of DSLAM 102 by means of a digital subscriber line 114. Likewise an end user device 116 is connected to port 3 of DSLAM 102 by means of a digital subscriber line (DSL) 118.

The same applies analogously to the other end user devices 118 to 132 that are connected to ports of DSLAM 104 or DSLAM 106 by means of respective digital subscriber lines.

Preferably, the digital subscriber lines 114, 118,... are in compliance with the VDSL2 standard.

The DSLAMs 102, 104, 106... are connected to a first level aggregation switch 140 by means of fiber optic cables 134, 136, 138,.... First level aggregation switch 140 is coupled to a second level aggregation switch 144 by fiber optic cable 142. The second level aggregation switch 144 is coupled to the broadband remote access servers 108, 110,... either directly or through the intermediary of one or more additional levels of aggregation switches.

The broadband remote access servers 108, 110,... may provide various kinds of telecommunication services and digital content, such as video on demand or digital high definition television programs. For each such service that is requested by a subscriber, a dedicated channel is established to the end user device of that customer. For example, a channel 146 is established between port 3 of DSLAM 102 and the end user device 116 for broadband remote access router service data. Another channel 148 is established for receiving a digital television program data stream, such as Microsoft television.

Another channel 150 is established for other individual services requested by the subscriber.

The DSLAMs 102, 104, 106,... that are used in the embodiment considered here are 'dumb' DSLAMs as they only provide basic functionalities for providing network connectivity but excluding advanced functionalities such as unicast MAC learning and ageing, unicast MAC forwarding and multicast MAC forwarding functionalities. Such advanced functionalities are provided by the first level aggregation switch 140 based on the definition of virtual ports.

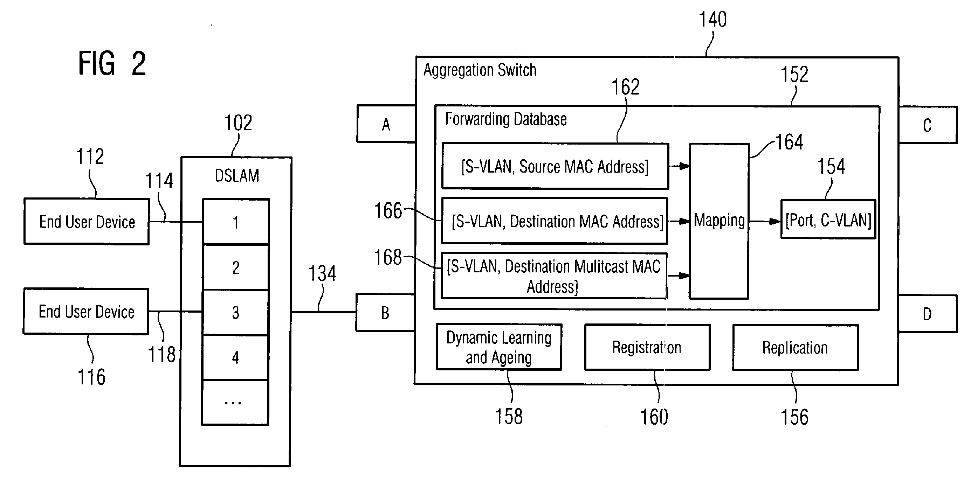

Fig. 2 shows a more detailed block diagram of an embodiment of the first level aggregation switch 140. The aggregation switch 140 has a number of physical ports, such as the ports A, B, C and D. By way of example only, fig. 2 shows DSLAM 102 that is connected to the port B of the first level aggregation switch 104 by means of the fiber optic cable 134 (cf. fig. 1).

The aggregation switch 140 has a forwarding database 152 that uses virtual port definitions. A virtual port is defined by a tuple consisting of the physical port identifier of a physical port of the first level aggregation switch 140 and a subscriber identifier for identification of a subscriber that is connected to that physical port. The subscriber identifier can be given by an exterior VLAN tag, such as the C-VLAN tag. The C-VLAN tag is given e.,g. by the port number of the DSLAM to which the DSL of the respective end user device is connected. For the exemplary end user device 116 that is the port 3 of the DSLAM 102.

In the embodiment considered here the tuples containing the physical port identifier of the aggregation switch 140 and the C-VLAN tag are stored as a database list 154 in the forwarding database 152.

If two end user devices are connected to the same DSLAM, such as end user devices 112 and 116 that are connected to DSLAM 102, they may both request the same service e.g. using the same destination multicast MAC address.

In this case the aggregation switch 140 receives a data stream in response to the identical service requests. This data stream is replicated by means of a replication component 156 of the aggregation switch 140 and sent to the requesting end user devices 112 and 116 via the respective virtual ports from the same physical port B using the virtual port definitions provided by the database list 154.

In addition to the replication component 156 the aggregation switch 140 has a dynamic learning and ageing component 158 and a registration component 160 for multicast groups registration.

The dynamic learning and ageing component 158 implements a unicast MAC learning functionality. Unicast MAC information is dynamically learnt with respect to the virtual port definitions provided by the database list 154. The dynamic learning and ageing component 158 creates entries into the database list 162 that stores S-VLAN tag and source MAC address tuples.

The S-VLAN tag is a interior VLAN tag that identifies the requested service. The source MAC address indicates the MAC address of the requesting end user device.

The dynamic learning and ageing component 158 does also create an entry into the database list 164 that maps the new entry of the database list 162 to one of the entries of the database list 154 containing a virtual port definition. The database entries into the database lists 162 and 164 are aged-out by means of the ageing functionality of the component 158 if they are not used after expiration of a predefined ageing time.

For unicast MAC forwarding a database list 166 is created that contains the destination MAC address rather than the source MAC address. Each entry into the database list 166 is mapped by means of a respective entry into the database list 164 to one of the virtual port definitions given by one of the entries of the database list 154.

Likewise, a database list 168 is created dynamically that contains tuples comprising destination multicast MAC addresses rather than source or destination MAC addresses. It is to be noted that only source unicast MAC Addresses are dynamically learnt from received frames. Destination unicast MAC addresses are not learnt; rather the forwarding of frames is done according to their respective destination Unicast MAC Address which match an entry in the forwarding database 152. Each entry into the database list 168 is mapped by means of a respective entry into the database list 164 to one of the virtual port definitions given by one of the entries of the database list 154. Multicast entries into the database list 168 are dynamically learnt using IGMP Snooping - i.e. snooping of control protocol frames of the IGMP protocol.

When a multicast frame is to be sent the aggregation switch 140 searches the forwarding database 152 to resolve the mapping from [S-VLAN, destination multicast MAC address] to the virtual port definitions. The frame is then replicated and each replication is tagged accordingly. At least some of the replications are sent out via the same physical port with the same S-VLAN and different C-VLAN tags.

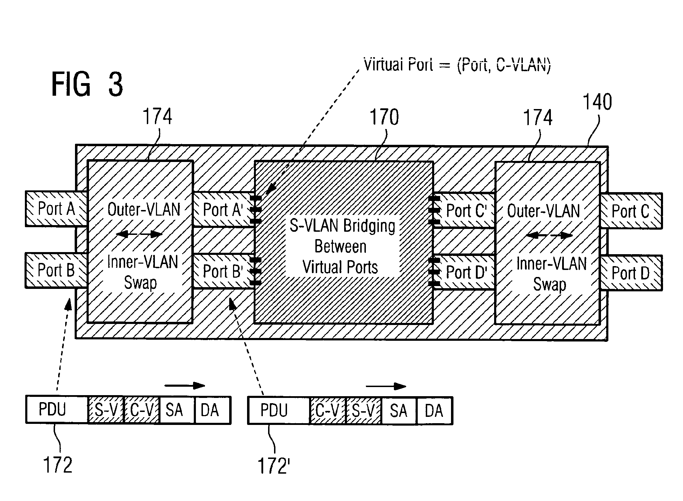

Fig. 3 shows a block diagram of a further embodiment of the first level aggregation switch 140. The aggregation switch 140 has a S-VLAN bridging component 170 that implements the functionalities of the forwarding database 152, the dynamic learning and ageing component 158, the registration component 160 and the replication component 156 as described above with respect to fig. 2.

By way of example only fig. 3 shows a frame 172. The frame 172 contains a packet data unit (PDU), i.e. the payload of the frame 172. Further, the frame contains a header starting with the destination MAC address (DA) of the frame 172 which is followed by the source MAC address (SA).

The header further contains the C-VLAN tag (C-V) and the S-VLAN tag (S-V) in that order. Hence, when the frame 172 is received at e.g. port B of the first level aggregation switch 140 the C-VLAN tag is received before the S-VLAN tag.

The aggregation switch 140 has a swapping component 174. The swapping component serves to swap the positions of the C-VLAN and S-VLAN tags contained in an inbound or outbound frame. Hence, with respect to the frame 172 that is considered here, the positions of the C-VLAN tag and the S-VLAN tag are interchanged and the resultant frame 172' is output at the port B' of the swapping component 174. The S-VLAN bridging component 170 thus processes the frame 172' on the basis of the swapped C-VLAN and S-VLAN tags. For an outbound frame an analogous swapping operation is performed by putting the C-VLAN and S-VLAN tags back into their original order.

### List of Reference Numerals

| | |
|---|---|
| 1 | Port |
| 2 | Port |
| 3 | Port |
| 4 | Port |
| 100 | Aggregation network |
| 102 | DSLAM |
| 104 | DSLAM |
| 106 | DSLAM |
| 108 | Broadband remote access server (BRAS) |
| 110 | BRAS |
| 112 | End user device |
| 114 | Digital subscriber line (DSL) |
| 116 | End user device |
| 118 | DSL |
| 120 | End user device |
| 124 | End user device |
| 126 | End user device |
| 128 | End user device |
| 130 | End user device |
| 132 | End user device |
| 134 | Fiber optic cable |
| 136 | Fiber optic cable |
| 138 | Fiber optic cable |
| 140 | First level aggregation switch |
| 142 | Fiber optic cable |
| 144 | Second level aggregation switch |
| 146 | Channel |
| 148 | Channel |
| 150 | Channel |
| 152 | Forwarding database |
| 154 | Database list |
| 156 | Replication component |
| 158 | Dynamic learning and ageing component |
| 160 | Registration component |
| 162 | Database list |
| 164 | Database list |
| 166 | Database list |
| 168 | Database list |
| 170 | S-VLAN bridging component |
| 172 | Frame |
| 174 | Swapping component |

## Claims

1. An aggregation switch for coupling a digital subscriber line access multiplexer (102, 104, 106,...) to an aggregation network (100), the aggregation switch having a set of physical ports (A, B, C, D)
**characterized in that**
each physical port of the set of physical ports being adapted to provide a set of virtual ports, wherein each of the virtual ports is defined by one of the physical ports in combination with a subscriber identifier.

2. The aggregation switch of claim 1 being operable to replicate an incoming data stream for transmission of the replicated data streams via the same physical port.

3. The aggregation switch of claim 1 or 2, wherein the subscriber identifier is given by a port identifier of the digital subscriber line access multiplexer to which an end user device of a given subscriber is connected.

4. The aggregation switch of claims 1, 2 or 3, wherein the subscriber identifier is given by an exterior VLAN tag.

5. The aggregation switch of any one of the preceding claims, further comprising a forwarding database (152) for the virtual ports.

6. The aggregation switch of claim 5, the forwarding database being operable for mapping first tuples of service identifiers and source media access control addresses to the virtual ports.

7. The aggregation switch of claim 6, wherein the service identifiers are given by interior VLAN tags.

8. The aggregation switch of any one of claims 5, 6 or 7, the forwarding database being operable for mapping second tuples comprising a service identifier and multicast destination media access control address to the set of virtual ports.

9. The aggregation switch of a any one of the preceding claims 5 to 8, the forwarding database being operable for mapping second tuples comprising service identifiers and destination multicast media access control addresses to the virtual ports

10. The aggregation switch of a any one of the preceding claims 5 to 9, being operable for dynamical learning of mapping information for the mapping to the virtual ports.

11. The aggregation switch of a any one of the preceding claims 5 to 10 being operable for ageing-out mapping information for the mappings to the virtual ports.

12. The aggregation switch of a any one of the preceding claims being a first level aggregation switch.

13. The aggregation switch of a any one of the preceding claims, the digital subscriber line access multiplexer being connected to end user devices by means of DSL broadband wire line communications, in particular in compliance with VDSL2.

14. A method of operating a first level aggregation switch (140) for coupling a digital subscriber line access multiplexer (102) to an aggregation network (100), the aggregation switch having a set of physical ports, the method comprising providing a set of virtual ports for each of the physical ports of the set of physical ports, wherein a virtual port is defined by one of the physical ports in combination with a subscriber identifier.

15. The method of claim 14, the subscriber identifier being given by a port identifier of the digital subscriber line access multiplexer to which an end user device of a given subscriber is connected.

16. The method of claim 14 or 15, further comprising replicating an incoming data stream for transmission of the replicated data streams via the same physical port.

17. The method of claims 14, 15 or 16, further comprising generating a forwarding database comprising mapping information to the virtual ports.

18. A computer program product comprising executable instructions for performing a method of any one of the claims 14 to 17.
